Europäisches Patentamt

European Patent Office

Office européen des brevets

(19)

(11) Veröffentlichungsnummer: **0 289 814
B1**

(12) # EUROPÄISCHE PATENTSCHRIFT

(45) Veröffentlichungstag der Patentschrift:
20.06.90

(51) Int. Cl.⁵: **F16H 7/08**

(21) Anmeldenummer: **88105762.4**

(22) Anmeldetag: **12.04.88**

(54) **Hydraulische Spannvorrichtung.**

(30) Priorität: **06.05.87  DE 3715038**

(43) Veröffentlichungstag der Anmeldung:
**09.11.88 Patentblatt 88/45**

(45) Bekanntmachung des Hinweises auf die Patenterteilung:
**20.06.90 Patentblatt 90/25**

(84) Benannte Vertragsstaaten:
**DE ES FR GB IT**

(56) Entgegenhaltungen:
**DE-A- 1 480 136
DE-A- 3 211 095
GB-A- 1 396 421**

(73) Patentinhaber: **INA Wälzlager Schaeffler KG,
Industriestrasse 1-3 Postfach 1220,
D-8522 Herzogenaurach(DE)**

(72) Erfinder: **Schmidt, Werner, Anna-Herrmann-Strasse 48,
D-8522 Herzogenaurach(DE)**
Erfinder: **Polster, Rudolf, Ing. grad., Dammstrasse 30,
D-8523 Baiersdorf(DE)**

(74) Vertreter: **Klug, Horst, Dipl.-Ing. (FH), c/o INA Wälzlager
Schaeffler KG Postfach 12 20,
D-8522 Herzogenaurach(DE)**

# Beschreibung

Die Erfindung betrifft eine hydraulische Spannvorrichtung, insbesondere Riemenspannvorrichtung, entsprechend den Mermalen im Oberbegriff von Anspruch 1.

Eine derartige Spannvorrichtung ist in der DE-A 32 11 095 beschrieben, bei der der Vorratsraum im Kolben ausgebildet ist. Dementsprechend ist der Balg in dem Kolben angeordnet. Der Kolben weist zum Leckspalt führende Durchbrechungen auf. Am Kolben ist ein Dichtring angeordnet, der den Leckspalt gegenüber dem Zylinder abdichtet. Dieser Dichtring wird bei der Kolbenbewegung ständig mitbewegt so daß über die Dichtung mit Benetzungsverlusten zu rechnen ist.

Aufgabe der Erfindung ist es, eine Spannvorrichtung der eingangs genannten Art vorzuschlagen, die lageunabhängig einsetzbar ist und bei der Ölverluste über den Leckspalt vermieden und bewegte Dichtringe unnötig sind.

Erfindungsgemäß ist obige Aufgabe durch die im Anspruch 1 aufgeführten Merkmale gelöst.

Hierbei ist der Leckspalt nur zum Druckraum und zum Vorratsraum hin offen. Eine Dichtung zwischen dem Kolben und dem Zylinder erübrigt sich dementsprechend. Dadurch sind Benetzungsverluste vermieden. Die vollständige Ölfüllung bleibt also auch nach langer Betriebszeit erhalten.

Vorteilhaft ist auch, daß die Spannvorrichtung unabhängig von der Einbaulage und der Betriebslage arbeitet, denn das Ölvolumen ist allseitig eingeschlossen. Im Betrieb ergibt sich ein druckloser Volumenausgleich.

Da der Vorratsraum außerhalb des Zylinders liegt, muß kein Hohlkolben verwendet werden. Es ist ein von der Kolbenbemessung unabhängiges, großes Volumen des Vorratsraumes erreichbar. Dies ermöglicht eine große Hubauslegung.

Vorteilhafte Ausgestaltungen der Erfindung ergeben sich aus den Unteransprüchen und der folgenden Beschreibung eines Ausführungsbeispiels. In der Zeichnung zeigen:

Figur 1 eine Spannvorrichtung in Halbansicht im Schnitt, im entspannten Zustand und
Figur 2 die Spannvorrichtung im gespanntem Zustand.

Ein Kolben(1) ist in einem Zylinder(2) geführt. Dabei besteht zwischen dem Kolben(1) und dem Zylinder(2) ein Leckspalt(3). Hinter dem Kolben(1) ist im Zylinder(2) ein Druckraum(4) ausgebildet. An dessen Bodenteil(5) ist ein Rückschlagventil(6), bestehend aus einer Ventilkappe(7), einer Druckfeder(8) und einer Ventilkugel(9) angeordnet.

Am Bodenteil(5) des Zylinders(2) ist außen eine Ringscheibe(10) öldicht befestigt. Eine entsprechende Ringscheibe(11) ist am Kolben(1) öldicht befestigt. Der Zylinder(2) ist von einem flexiblen Balg(12) umschlossen, der einerseits an der Ringscheibe(10) und andererseits an der Rinsgscheibe(11) abgedichtet befestigt ist. Der Balg(12) bildet einen Vorratsraum(13) für Hydrauliköl. Dieser ist über Bohrungen(14) des Bodenteils(5) mit dem Rückschlagventil(6) verbunden. Eine Bohrung(15) dient der Ölfüllung des Druckraumes(4) und des Vorratsraumes(13). Sie ist im Betrieb durch eine Verschlußkappe(27) verschlossen.

Der Leckspalt(3) mündet an seiner einen Seite(16) offen in den Druckraum(4). An seiner anderen Seite(17) mündet er offen in den Vorratsraum(13). Diese Seite(17) des Leckspaltes(3) ist also von dem Balg(12) gegen die Umgebung abgedeckt. Zwischen dem Zylinder(2) und dem Kolben(1) sind keine Dichtringe vorgesehen. Am Kolben(1) sitzt ein Sprengring(18) zur Hubbegrenzung. Der Sprengring(18) ist in einer entsprechenden Ausnehmung(19) des Zylinders(2) mit dem Kolben(1) verschieblich.

Außen an der Ringscheibe(10) ist eine Außenhülse(20) befestigt. In diese ist eine Schutzhülse(21) eingesetzt. Am Außenumfang der Ringscheibe(11) ist eine Außenhülse(22) befestigt, die die Außenhülse(20) teleskopartig übergreift. Außerdem ist an der Ringscheibe(11) eine Schutzhülse(23) angeordnet, die in die Schutzhülse(21) teleskopartig eingreift. Zwischen der Außenhülse(20) und der Schutzhülse(21) ist eine Druckfeder(24) angeordnet. Diese kann stattdessen auch zwischen dem Zylinder(2) und den Schutzhülsen(21,23) im Vorratsraum(13) angeordnet sein, wobei der Balg(12) außerhalb der Schutzhülsen(21,23) liegt. Die Schutzhülsen(21,23) decken den Balg(12) gegen die Druckfeder(24) ab.

Die Betätigungsenden des Kolbens(1) und des Zylinders(2) können in beliebiger Form, beispielsweise als Kugelkopf, als Kugelkalotte oder als Befestigungsauge, wie bei Stoßdämpfern üblich, ausgebildet sein.

Die Wirkungsweise der beschriebenen Spannvorrichtung ist etwa folgende:

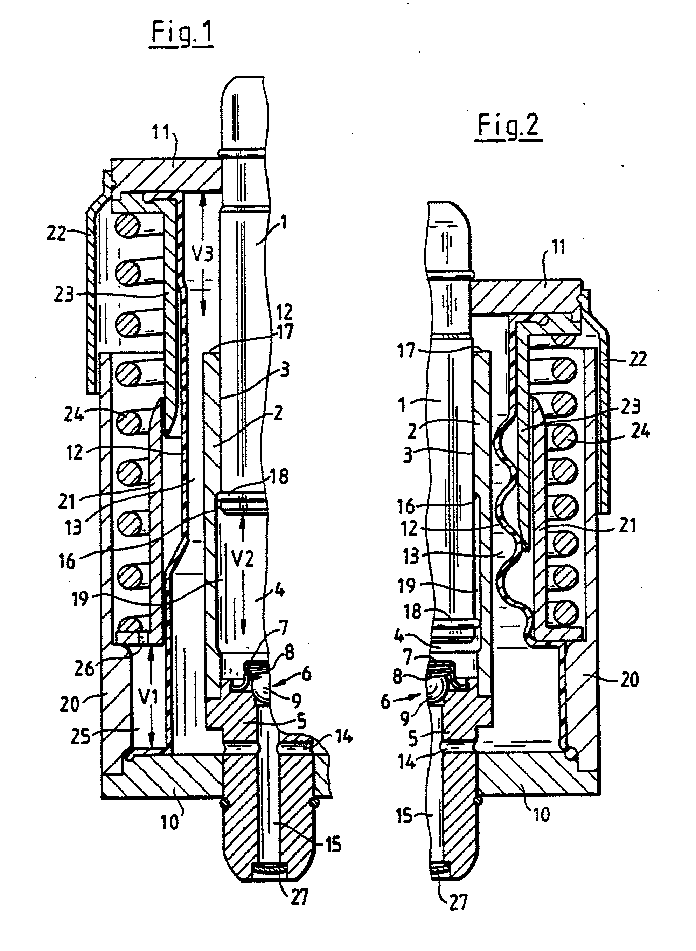

Wird nach dem vollständigen Füllen des Druckraums(4) und des Vorratsraums(13) mit Öl ausgehend von der Stellung nach Figur 1 gegen die Kraft der Druckfeder(24) auf den Kolben(1) gedrückt, dann sperrt das Rückschlagventil(6) und Öl sickert durch den Leckspalt(3) aus dem Druckraum(4) in den Vorratsraum(13). Im Zuge des Niederdrückens des Kolbens(1) faltet sich der Balg(12) zwischen dem Außenumfang des Zylinders(2) und den Schutzhülsen(21,23). Der Balg(12) beult sich in einen Aufnahmeraum(25) (vgl.Fig.1) aus, der durch die Außenhülse(20) begrenzt ist. Das Volumen(V1) des Aufnahmeraumes(25) ist dabei gleich der Summe des Volumens(V2) des Öles, das beim vollständigen Eindrücken des Kolbens(1) aus dem Druckraum(4) verdrängt wird, und des Volumens(V3), um das sich durch das Niederdrücken des Kolbens(1) der Vorratsraum(13) in Axialrichtung verkürzt. Es ist also ein druckloser Volumenausgleich erreicht.

Um zu vermeiden, daß sich in Aufnahmeraum(25) ein Luft-Gegendruck aufbaut, ist dieser mit Öffnungen(26) versehen.

Die Eindrückbewegung des Kolbens(1) ist durch die Bemessung des Leckspaltes(3) gedämpft.

Entspannt sich ausgehend von der in Figur 2 dargestellten Stellung die Druckfeder(24), dann schiebt sich der Kolben(1) hoch. Das Rückschlagventil(6) öffnet und über die Bohrungen(14) wird aus dem Vorratsraum(13) Öl in den Druckraum(4) nachgesaugt. Entsprechend verringert sich der Durchmesser des Balges(12) im Bereich des Aufnahmeraumes(25) (vgl.Fig.1). Die Öffnungen(26) verhindern, daß sich im Aufnahmeraum(25) ein Unterdruck aufbaut. Entsprechend der Verschiebung des Kolbens(1) streckt sich der Balg(12).

**Patentansprüche**

1. Hydraulische Spannvorrichtung, insbesondere Riemenspannvorrichtung, bei der ein Druckraum (4) hinter einem in einem Zylinder (2) geführten Kolben (1) ausgebildet ist, bei der ein Vorratsraum (13) der wie der Druckraum voll mit Öl befüllt und mit diesem über ein Rückschlagventil (6) verbunden ist, mittels eines flexiblen Balges (12) gegen die Umgebung abgeschlossen ist, und bei der ein gegen die Umgebung abgedichteter Leckspalt (3) zwischen dem Kolben und dem Zylinder an seiner einen Seite zum Druckraum und an seiner anderen Seite zum Vorratsraum offen ist, wobei eine Druckfeder (24) den Kolben aus dem Zylinder herausdrückt, dadurch gekennzeichnet, daß der Vorratsraum (13) den Zylinder (2) umschließt und außen von dem Balg (12) begrenzt ist, daß der Balg (12) an seiner Seite an einem zylinderfesten Teil (10) und an seiner anderen Seite an einem kolbenfesten Teil (11) abgedichtet befestigt ist und daß die andere Seite (17) des Leckspalts (3) unmittelbar in den Vorratsraum (13) mündet.

2. Spannvorrichtung nach Anspruch 1, dadurch gekennzeichnet, daß am Kolben (1) und am Zylinder (2) je eine Ringscheibe (11, 10) befestigt ist, an der der Balg (12) jeweils abgedichtet festliegt.

3. Spannvorrichtung nach Anspruch 1 oder 2, dadurch gekennzeichnet, daß die zwischen dem Zylinder (2) und dem Kolben (1) angeordnete Druckfeder (24) den Balg (12) im wesentlichen umschließt.

4. Spannvorrichtung nach Anspruch 3, dadurch gekennzeichnet, daß zwischen der Druckfeder (24) und dem Balg (12) am Kolben (1) und am Zylinder (2) sich teleskopartig übergreifende Schutzhülsen (23, 21) angeordnet sind.

5. Spannvorrichtung nach einem der vorhergehenden Ansprüche, dadurch gekennzeichnet, daß am Kolben (1) und am Zylinder (2) sich teleskopartig übergreifende Außenhülsen (22, 20) angeordnet sind, wobei der Balg (12) und gegebenenfalls die Druckfeder (24) innerhalb der Außenhülsen (22, 20) liegen.

6. Spannvorrichtung nach einem der vorhergehenden Ansprüche, dadurch gekennzeichnet, daß ein Aufnahmeraum (25) vorgesehen ist, in den sich der Balg (12) beim Eindrücken des Kolbens (1) einbeult.

7. Spannvorrichtung nach Anspruch 6, dadurch gekennzeichnet, daß der Aufnahmeraum (25) über Öffnungen (26) mit der Umgebung in Verbindung steht.

**Claims**

1. Hydraulic tensioning device, in particular a belt tensioning device, in which a pressure chamber (4) is formed behind a piston (1) guided in a cylinder (2) and in which a reservoir (13), like the pressure chamber, is completely filled with oil and connected with this via a non-return valve (6) and shielded from the environment by means of a flexible bellows (12) and in which a leakage gap (3) shielded from the environment is situated between the piston and the cylinder and opens on one side towards the reservoir and on the other side, towards the pressure chamber, a compression spring (24) pushing the piston out of the cylinder, characterised in that the reservoir (13) surrounds the cylinder (2) and is delimited on the outside by the bellows (12), the bellows (12) is fixed on one side to a part (10) rigidly connected with the cylinder and on the other side, to a part (11) rigidly connected with the piston, and the other side (17) of the leakage gap (3) opens directly into the reservoir (13).

2. Tensioning device according to claim 1, characterised in that an annular disc (11, 10) is fixed to each of the piston (1) and the cylinder (2), and the bellows (12) is fixed in a leak-proof manner to these discs.

3. Tensioning device according to claim 1 or 2, characterised in that the compression spring (24) arranged between the cylinder (2) and the piston (1) essentially surrounds the bellows (12).

4. Tensioning device according to claim 3, characterised in that between the pressure spring (24) and the bellows (12), protecting sleeves (23, 21) engaging with each other after the fashion of a telescope are arranged on the piston (1) and the cylinder (2).

5. Tensioning device according to one of the preceding claims, characterised in that outer sleeves (22, 20) engaging with each other after the fashion of a telescope are arranged on the piston (1) and the cylinder (2), the bellows (12) and if need be, the compression spring (24), being situated within the outer sleeves (22, 20).

6. Tensioning device according to one of the preceding claims, characterised in that a receiving space (25) is provided into which the bellows (12) bulges when the piston (1) is pressed in.

7. Tensioning device according to claim 6, characterised in that the receiving space (25) communicates with the environment through openings (26).

**Revendications**

1. Tendeur hydraulique, en particulier tendeur de courroies, dans lequel une chambre de pression (4) est formée derrière un piston (1) guidé dans un cylindre (2), un réservoir (13), rempli complètement d'huile, comme la chambre de pression, est relié à celle-ci par un clapet anti-retour (6) et est séparé de l'environnement par un soufflet flexible (12), et dans lequel un intervalle de fuite (3) étanche par rapport à l'environnement et situé entre le piston et le cylindre, est ouvert d'un de ses côtés vers la chambre de pression et de l'autre vers le réservoir et un ressort de pression (24) pousse le piston hors du cylindre, caractérisé en ce que le réservoir (13) entoure le cylindre (2) et est délimité à l'extérieur par le soufflet (12), le soufflet (12) est fixé de manière étanche à un de ses côtés sur une partie (10) fixée au cylindre et à l'autre côté sur une partie (11) fixée au piston, et l'autre côté (17) de l'intervalle de fuite (3) débouche directement dans le réservoir (13).

2. Tendeur selon la revendication 1, caractérisé en ce que des rondelles annulaires (11, 10) sont fixées au piston (1) et respectivement au cylindre (2), et en ce que le soufflet (12) est fixé de manière étanche aux deux rondelles (11, 10).

3. Tendeur selon la revendication 1 ou 2, caractérisé en ce que le ressort de pression (24), agencé entre le cylindre (2) et le piston (1), entoure globalement le soufflet (12).

4. Tendeur selon la revendication 3, caractérisé en ce qu'entre le ressort de pression (24) et le soufflet (12), des manchons de protection (23, 21) sont agencés sur le piston (1) et sur le cylindre (2) et s'engagent l'un l'autre de façon télescopique.

5. Tendeur selon une des revendications précédentes, caractérisé en ce que sur le piston (1) et le cylindre (2), sont agencés des manchons extérieurs (22, 20) qui s'engagent l'un l'autre de façon télescopique et en ce que le soufflet (12) et, le cas échéant, le ressort de pression (24), sont situés à l'intérieur des manchons extérieurs (22, 20).

6. Tendeur selon une des revendications précédentes, caractérisé en ce qu'il est prévu un espace de réception (25) dans lequel se gonfle le soufflet (12) quand le piston (1) est enfoncé.

7. Tendeur selon la revendication 6, caractérisé en ce que l'espace de réception (25) communique avec l'environnement par des ouvertures (26).

Fig.1

Fig.2